**Europäisches Patentamt**

**European Patent Office**

**Office européen des brevets**

(19)

(11) Veröffentlichungsnummer : **0 029 946**
**B1**

(12) **EUROPÄISCHE PATENTSCHRIFT**

(45) Veröffentlichungstag der Patentschrift :
21.03.84

(21) Anmeldenummer : 80107051.7

(22) Anmeldetag : 14.11.80

(51) Int. Cl.³ : **G 11 B 27/00//** G11B15/06,
G11B23/04, G11B23/30,
G11B27/34

(54) **Anordnung zum Speichern und Wiederauffinden von Stellen auf einem bandförmigen Aufzeichnungsträger in einem Aufnahme- und/oder Wiedergabegerät.**

(30) Priorität : 29.11.79 DE 2948021

(43) Veröffentlichungstag der Anmeldung :
10.06.81 Patentblatt 81/23

(45) Bekanntmachung des Hinweises auf die Patenterteilung : 21.03.84 Patentblatt 84/12

(84) Benannte Vertragsstaaten :
**AT BE CH DE FR GB LI NL SE**

(56) Entgegenhaltungen :
**BE-A- 871 596**
**DE-A- 2 543 276**
**DE-A- 2 650 665**
**DE-A- 2 828 050**
**FR-A- 2 120 298**
**FR-A- 2 170 510**
**FR-A- 2 344 926**
**NL-A- 7 314 756**
**US-A- 3 998 778**
**US-A- 4 224 644**
**IBM TECHNICAL DISCLOSURE BULLETIN, Band 20, Nr. 4, September 1977, New York, US, R. BAIRD: "Rapid access method for fixed block DASD records", Seiten 1565-1566**
**SMPTE JOURNAL, Band 87, Nr. 8, August 1978, Scarsdale, US, G.R. SWETLAND: "Applying the SMPTE time and control code to television audio post production", Seiten 508-512**
**RESEARCH DISCLOSURE, OKT. 1979, S. 560-563**

(73) Patentinhaber : **BASF Aktiengesellschaft**
**Carl-Bosch-Strasse 38**
**D-6700 Ludwigshafen (DE)**

(72) Erfinder : **Schomann, Klaus Dieter**
**Kopernikusstrasse 47**
**D-6700 Ludwigshafen (DE)** .

EP 0 029 946 B1

## Anordnung zum Speichern und Wiederauffinden von Stellen auf einem bandförmigen Aufzeichnungsträger in einem Aufnahme- und/oder Wiedergabegerät

Technisches Gebiet der Erfindung

Die Erfindung betrifft eine Anordnung zum Speichern und Wiederauffinden von Stellen auf einem bandförmigen Aufzeichnungsträger, insbesondere einer Magnetbandkassette, in einem Aufnahme/Wiedergabegerät, sowie eine Steuereinheit für den Transport des Aufzeichnungsträgers und zur fortlaufenden Bildung von Ortsinformationen des Aufzeichnungsträgers relativ zum Abtastkopf, wobei dem Aufzeichnungsträger ein Speicher zugeordnet ist, der mit dem Aufzeichnungsträger dem Gerät entnehmbar und darin wiedereinsetzbar ist und der zur Speicherung von der Ortsinformation von zumindest einer Stelle einer Signalaufzeichnung auf dem Aufzeichnungsträger dient.

Mit der US-A-3 988 778 ist ein Bandspeichergerät für militärische Aufklärungszwecke bekannt, bei dem elektronische Speicher für das Speichern und nachfolgende Abrufen von Ortsinformationen für Bandstellen mit Aufzeichnungen vorgesehen sind. Dabei werden während der Aufzeichnung auf das Band gleichzeitig Zeitmarken mitaufgereichnet. Es ist ein Zähler vorhanden, der die Anzahl der Zeitmarken zur Bildung einer Ortsinformation zählt. Die Ortsinformation ist zu auswählbaren Zeiten in einem Speicher überführbar aus dem sie zum Wiederauffinden der ausgewählten Stelle wieder abrufbar ist. Die gespeicherten Informationen verbleiben in den geräteseitigen Speichern auch nach Entnahme des Bandes, das dann während des Aufzeichnungsvorgangs aufgebrachte Zeitmarken trägt. Dadurch ist auf dem benutzten Gerät nur das benutzte Band und kein anderes Band verwendbar, so daß die Auslastung des Gerätes nur ungenügend sein kann.

Aus der BE-A-871 596 ist ein Bandkassettensystem bekannt, in dem jede Kassette einen eigenen, gleichzeitig aus dem Gerät entnehmbaren, elektronischen, insbesondere statischen, Speicher besitzt. Dieser Speicher dient im Gerät zum Einschreiben von Signalpositionen, vorzugsweise zum Zeitpunkt einer Transportunterbrechung des Kassettenbandes. Das Gerät enthält keine eigenen Speichereinrichtungen für Signalpositionen des Kassettenbandes. Nach erneuter Eingabe der Kassette mit dem dazugehörigen Speicher, wird dessen Inhalt geräteseitig gelesen und angezeigt, so daß der Anwender die Lage der aufzusuchenden Bandstelle in Bezug auf eines der Bandenden kennt und das Gerät bis zu dieser Stelle steuern kann. Diese halbautomatische Gerätebedienung ist nachteilig und personalaufwendig.

Die Verlagerung eines in der US-A-3 988 778 benutzten geräteseitigen elektronischen Speichers, der z. B. Stromversorgung benötigt, in eine Bandkassette wäre äußerst aufwendig und für in Massen hergestellte Kassetten undenkbar, es sei denn, der Speicher diente auch zur Signalaufzeichnung und ersetzte damit das Kassettenband.

Für Datenplatten ist es ferner aus dem IBM-Disclosure Bulletin, Vol. 20, Nr. 4, Sept. 1977, S. 1565 und 1566 bekannt, in mehreren vorgegebenen Abschnitten einzelner Spuren Ortsinformationen aufzuzeichnen, die einen schnellen Zugriff des Abtastsystems zu jedem Ort der Platte ermöglichen. Die Ortsinformationen werden direkt beim Schreibvorgang abgespeichert.

Es ist auch bekannt, den gesamten Aufzeichnungsbereich einer Videoplatte in kleinere Einheiten aufzuteilen und die Ortsinformation (Spurnummer) jeder kleineren Einheit in einem Indexbereich zu speichern (Research disclosure Okt. 1979 S. 560-563).

In jedem Fall ist wertvolle Aufzeichnungsfläche zur Speicherung der Ortsinformationen erforderlich und mindert dadurch die zur Nutzaufzeichnung verfügbare Speicherkapazität.

Die DE-B-21 64 230 beschreibt beispielsweise ein Verfahren zum Auffinden einer leeren Aufzeichnungszone auf Magnetband, wobei gleichlangen, aufzeichnungsfreien Bandzonen Leermarkierungen zugeordnet sind, die beim Suchvorgang gezählt und deren Anzahl mit einem vorgegebenen Zeichen verglichen werden, bevor ein neuer Aufzeichnungsvorgang erfolgt. Nachteilig ist hierbei wieder, daß die Leermarkierung einen separaten Aufzeichnungsvorgang über die gesamte Bandlänge erfordert und sich ein Verlust an Aufzeichnungsfläche ergibt. Auch können nur leere Bandstellen aufgesucht werden.

Mit der DE-B-26 50 665 ist für die Ermittlung der bespielten oder freien Bandlänge von Bandkassetten oder Bandaufzeichnungsträgern bekannt, die momentane Koordinate einer Bandstelle elektronisch abzubilden, d. h. zu erfassen und zu speichern. Das erfolgt über den Vergleich von Tachoimpulsen von zwei Wickeltellern und Umrechnung in die Bandstellenkoordinate, wobei die Dicke des Aufzeichnungsträgers berücksichtigt werden muß, so daß dieses Verfahren nur bei Bändern gleicher Dicke anwendbar ist.

Technische Aufgabenstellung der Erfindung

Es ist Aufgabe der vorliegenden Erfindung, unter Vermeidung der obigen Nachteile eine Anordnung zum Speichern und Auffinden der Ortsinformationen einer oder mehrerer Stellen auf einem bandförmigen Aufzeichnungsträger bereitzustellen, wobei die Informationen dem individuellen Aufzeichnungsband zugeordnet, weitgehend ohne Verlust an Bandkapazität, gespeichert werden unabhängig davon, ob sich der Aufzeichnungsträger im oder außerhalb des Aufzeichnungs- und/oder Wiedergabegerät befindet.

Merkmale und Vorteile der Lösungen der Erfindung

Die Aufgabe wird erfindungsgemäß gelöst mit einer Anordnung gemäß Anspruch 1.

Prinzipiell wird damit die Ortsinformation über die Stelle des Aufzeichnungsbandes in einem elektronischen Speicher zwischengespeichert, solange der Aufzeichnungsträger im Gerät ist, erst wenn er daraus entnommen/entladen wird, wird die Ortsinformation auf dem Aufzeichnungsband selbst, in einem sonst unbenutzten Aufzeichnungsbereich, dem Anfangs- oder Endbereich des Bandes, gespeichert. Bei erneutem Einlegen/Laden des Aufzeichnungsbandes in dasselbe oder ein anderes Gerät desselben Systems wird die Ortsinformation wieder in das Gerät eingegeben und steht dort zum Wiederauffinden der Stellen zur Verfügung. Ein Vorwählen einer gewünschten Stelle läßt sich durch Eingeben einer Befehlsinformation in das Gerät bewerkstelligen, so daß der Vorgang des Wiederauffindens dieser Stelle in kürzester Zeit erfolgen kann.

Zusammenfassend lassen sich folgende Vorteile aufführen.

Kurze Zugriffszeit zu gewünschten Aufzeichnungs/Wiedergabestellen,

Einfache Bedienbarkeit durch Amateure,

Verwendbarkeit jeder üblichen Magnetbandkassette ohne Zusatzvorrichtung,

Unabhängigkeit vom jeweiligen Gerät, daher Erleichterung einer Aufzeichnungsträger-Geräte-Kompatibilität,

Einfache und wenig aufwendige Speicherung der Stellen-Ortsinformationen,

Sicherheit gegen fehlerhaftes Speichern.

Die Speicherung der Ortsinformation in einem Anfangs- oder Endabschnitt des Aufzeichnungsbandes ist besonders günstig, wenn das Aufzeichnungsband sowieso aufzeichnungsfreie Bereiche aufweist, wie z. B. bei Längsaufzeichnung in parallelen Spuren auf Magnetbändern, wo hinter den Bandlauf-Richtungsumkehrpunkten freie Bandstücke zur Verfügung stehen.

Eine weitere Ausgestaltung der erfindungsgemäßen Anordnung für Aufzeichnungsbänder mit mehreren Spuren wird darin gesehen, daß die Ortsinformation eine Information über den Abstand der Stelle von einer Feststelle auf dem Aufzeichnungsträger, insbesondere vom Anfang oder vom Ende des Aufzeichnungsträgers, und die jeweilige Spurzahl enthält.

Zweckmäßig kann die Ortsinformation in Form eines digitalen Kodes, insbesondere eines mittels eines selbsttaktenden Kodes kodierten Signals gespeichert werden. Damit ist Unabhängigkeit von der Bandgeschwindigkeit erreicht und dadurch läßt sich z. B. bei Aufzeichnungssystemen mit sonst nicht benutzten Bandbereichen der Speicherplatzbedarf minimieren.

In weiterer Ausgestaltung der erfindungsgemäßen Anordnung kann außer dem Zwischenspeicher auch ein Istwertspeicher vorgesehen sein.

Damit ist es vorteilhaft möglich, daß die Ortsinformation der jeweils gerade am Kopf befindlichen Stelle zuerst im Istwertspeicher gespeichert wird und beim Speichern einer bestimmten Stelle die Ortsinformation in den Zwischenspeicher (Sollwertspeicher) übertragen wird, in dem Moment, wenn diese Stelle gerade aufgezeichnet oder wiedergegeben wird.

Der Zwischenspeicher kann zweckmäßig mindestens ein Schieberegister enthalten.

In Weiterbildung der Anordnung ist es auch zweckmäßig, daß zum Wiederauffinden nach Eingabe der Befehlsinformation « Aufsuchen » (Ortsinformation der gewünschten Stelle) die Koppeleinrichtung eine Vergleichsschaltung enthält, die die Inhalte des Zwischenspeichers und des Istwertspeichers vergleicht und ein Steuersignal für die Steuereinheit des Geräts bildet, wodurch der Aufzeichnungsträger in eine Stellung überführbar ist (die gewünschte Stelle), in der die Differenz der Speicherinhalte Null ist.

Damit wird erreicht, daß einfache und zuverlässige elektronische Baueinheiten verwendbar sind.

Besagtem Schieberegister des Zwischenspeichers können Kodier- und Dekodiereinrichtungen für die Ortsinformation nach- bzw. vorgeschaltet sein. Dazu sind ebenfalls handelsübliche Schaltungen vorteilhaft verwendbar.

Wie an sich aus der BE-A-871 596 bekannt, kann es bei der erfindungsgemäßen Anordnung zweckmäßig sein, eine Anzeigevorrichtung für den Inhalt des Momentan-Zwischenspeichers vorzusehen, damit die Momentan-Stellung des Aufzeichnungsträgers jederzeit erkennbar ist.

In weiterer, praktischer Ausbildung kann die Vergleichsschaltung Schwellen für verschiedene Differenzwerte der Speicherinhalte des Zwischenspeichers und des Istwertspeichers aufweisen, wobei die Schwellen unterschiedliche Geschwindigkeiten des Laufwerks zugeordnet sind, wodurch eine zweckmäßig angepaßte Suchlaufzeit steuerbar wird.

Der dem Aufzeichnungsträger zugeordnete Speicher hat vorteilhaft eine Speicherkapazität für mehrere Ortsinformationen, was insbesondere bei Aufzeichnungsträgern großer Kapazität von mehr als drei Stunden Spielzeit ratsam ist.

Ausführungsbeispiel der Erfindung

Einzelheiten der erfindungsgemäßen Anordnungen sind der folgenden Beschreibung eines in der Zeichnung dargestellten Ausführungsbeispiels entnehmbar.

In der Zeichnung zeigen :

Figur 1 ein Blockschema des Verfahrens zum Speichern und Wiederauffinden einer Stelle auf einem Aufzeichnungsträger

Figur 2 ein Magnetband mit Parallelspuren und markanten Bandstellen

Figur 3 ein Blockschaltbild einer Anordnung zum Speichern und Wiederauffinden einer Bandstelle.

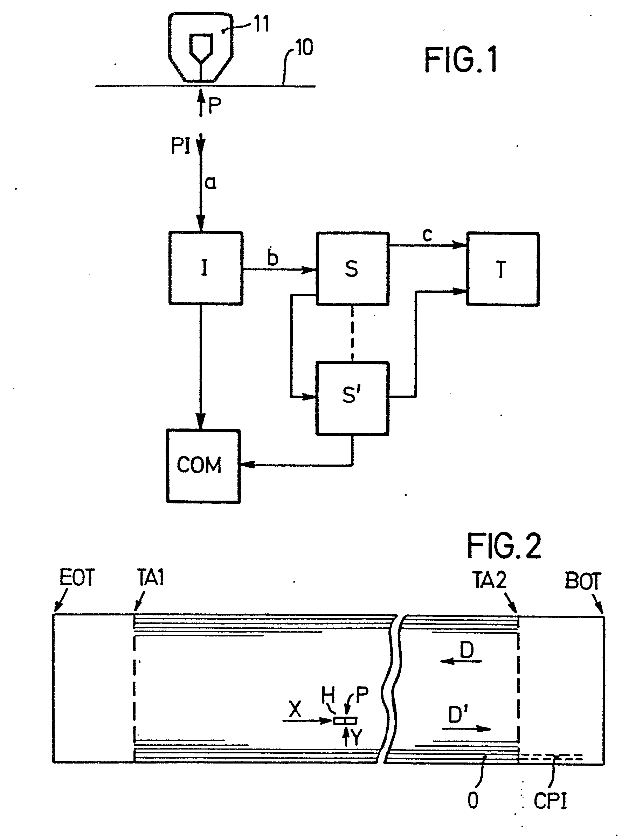

Figur 1 zeigt im Blockschaltbild einen bandförmigen Aufzeichnungsträger 10, z. B. Magnetband oder optisch oder kapazitiv abtastbare Aufzeichnungsträger, mit entsprechendem Abtastkopf 11, der zur Aufnahme und Wiedergabe gleichermaßengeeignet sein soll, sowie Istwert- und Zwischenspeicher I und S, einen Vergleicher COM, der an die Speicher I und S angeschlossen ist sowie einen dem Aufzeichnungsträger 10 zugeordneten, nichtflüchtigen Speicher T. Nichtflüchtige Speicher im Sinne der vorliegenden Erfindung werden durch einen Anfangs- oder Endbereich des bandförmigen Aufzeichnungsträgers gebildet. Die momentane Ortsinformation PI der Stelle P des Aufzeichnungsträgers 10 relativ zum Abtastkopf 11 wird über Leitung a beim Aufzeichnungs- und Wiedergabebetrieb ständig dem Istwertspeicher I zugeführt, dort momentan gespeichert oder gegebenenfalls momentan angezeigt und im Falle einer Vorwahl, z. B. am Aufzeichnungs- oder Wiedergabeende über die Leitung b in den Zwischenspeicher S übertragen. Erst beim Herausnehmen/Entladen des Aufzeichnungsträgers 10 (im folgenden einfach als « Band » bezeichnet) erfolgt über Leitung c das Übertragen der Ortsinformation PI in den Speicher T. Beim Einsetzen/Laden des Bandes 10 findet ein Wiedereinschreiben der Ortsinformation PI in den Speicher S statt und wenn eine Befehlsinformation zum Aufsuchen/Wiederauffinden der Stelle P vorliegt, so beginnt der Vergleicher COM die Speicherinhalte von I und S bei Bandlauf solange zu vergleichen bis die Differenz Null ist, wobei eine gezielte Steuerung des Bandlaufs in einer der beiden möglichen Richtungen vorausgesetzt wird.

Nach dieser prinzipiellen Beschreibung wird anhand eines konkreten Bandlaufwerks vom Schnelläufertyp die Anordnung näher beschrieben.

Figur 2 zeigt ein gebrochen dargestelltes Magnetband 10 mit einer Vielzahl von parallelen Längsspuren, von denen nur die erste mit (0) bezeichnet ist. Angenommen die Spur (0) wird in Bandlauf-Richtung D' aufgezeichnet, so wird die Spur (1) in der Gegenrichtung D aufgezeichnet usw. Jeweils an den Bandstellen TA1 und TA2, die auf dem Band in geeigneter Weise markiert sind, erfolgt das Laufrichtungsumschalten von D nach D' und umgekehrt und der Magnetkopf H wird auf die nächstfolgende Spur eingestellt. Bandanfangs- und Bandendpunkte sind mit BOT bzw. EOT bezeichnet. Die jeweilige Lage des Kopfes H ist durch die Spurkoordinate Y (Zahl der Spur) und die Bandlänge X (hier bezogen auf die Stelle TA$_1$ aber ebenso auf TA$_2$, BOT oder EOT beziehbar) bestimmt und abbildbar.

Als Bandlänge X ist auch der jeweilige Kopfabstand vom letzen Bandumschaltpunkt TA1 oder TA2 festlegbar.

Hat das Band keine Parallelspuren, so ist die Längenkoordinate die Entfernung, längs des Wegs des Kopfes oder der Köpfe auf dem Band, vom Bandanfang oder Bandende BOT oder EOT. Eine Spurkoordinate gibt es in diesem Fall, der z. B. bei einer Endlosaufzeichnung in einer einzigen Längsspur praktisch auftritt, nicht.

Die praktische Ausführung der Schaltung kann auf verschiedene Arten erfolgen, gemeinsam sind allen erfindungsgemäßen Anordnungen jedoch folgende Operationen :

a) Die Spur- und/oder Längenkoordinate oder diese gleichwertige Informationen werden in einem Zwischenspeicher (S) gespeichert.

b) Beim Entladen des Bandes wird der Inhalt des Zwischenspeichers (S) in einen Band anfangs- oder Bandendbereich (T) übertragen.

c) Beim Laden des Bandes wird der Inhalt des Speichers (T) wieder in das Gerät eingegeben und dient zum Wiederauffinden zumindest einer gewünschten Bandstelle.

Im folgenden wird eine mögliche Ausführung einer Anordnung beschrieben, die 8-bit-Zähler und Schieberegister verwendet :

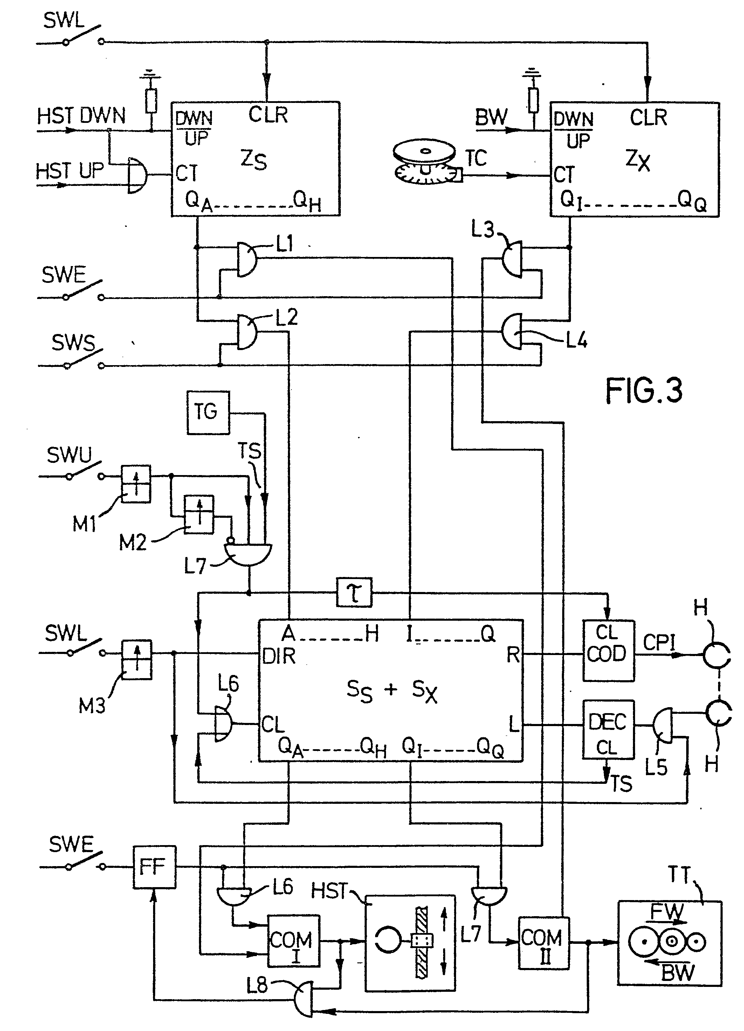

Durch die Angabe von Spurzahl- und Längenkoordinate ist eine Stelle auf dem Band vollständig bestimmt. Die Ausführung sieht nun vor, den Inhalt eines 8-bit-Zählers Zs (Figur 3) ständig gleich der momentanen Spurkoordinate zu halten (Istwertspeicher). Bei einem Schnelläufer-Rekorder (im folgenden als « LVR-Gerät » bezeichnet) wird der Kopf (H) mittels einer Kopffeinstellvorrichtung jeweils auf eine der Parallelspuren ausgerichtet. Eine Steuerelektronik liefert die Steuerimpulse, die die Einstellvorrichtung für den Kopf schrittweise nach oben oder nach unten bewegen (steppen).

Das Herauf- und Herunterzählen des Zählers Zs läßt sich durch dieselben Steuerimpulse bewerkstelligen.

Das LVR-Gerät weist ferner eine Tachoeinrichtung auf, die von der Drehzahl der Bandantriebsrolle abgeleitete Tachoimpulse liefert. Also kann als Istwertspeicher ein zweiter 8-bit-Zähler Zx ständig auf einem Wert gehalten werden, der der momentanen Längenkoordinate X entspricht. Hierzu werden die Tachoimpulse benutzt : Die Wiederholfrequenz der Tachoimpulse wird z. B. um einen solchen Faktor heruntergeteilt, daß die erhaltene Frequenz bei normaler Bandgeschwindigkeit 150/128 Hz ist. Wird Z$_x$ durch jeden Impuls um 1 weitergezählt, so werden die ersten 7 bit gerade in 150 sec (der Spielzeit einer vollen Spur beim LVR-Gerät) gesetzt. Denkt man sich die Länge der Spur in 128 Teile geteilt, so ist jedem solchen Teil ein gewisser Zählerstand eindeutig zugeordnet. Bei der Richtungsumkehr wird Zx auf O ... O zurückgesetzt, durch einen Impuls an seinen Lösch-Eingang (CLR). Z$_s$, Z$_x$ enthalten also in jedem Augenblick die momentanen Lage-Koordinaten des Kopfes auf dem Band.

Im folgenden werden Einzeloperationen der Anordnung näher erläutert :

Vorwählen einer Bandstelle

Soll die Bandstelle P, auf der sich der Kopf H gerade befindet, vorgewählt werden, so wird durch Betätigung einer geeigneten Schaltvorrichtung SWS mit Tastendruck der momentane Inhalt von Z$_s$ und Z$_x$ parallel in zwei 8-bit-Schieberegister, S$_s$ und S$_x$, geladen und dort gespeichert, vgl. Fig. 3. S$_s$ und S$_x$ müssen Links-Rechts-Schieberegister mit parallelen und seriellen Datenein- und -ausgängen sein, z. B. je 2x SN 7495 kombiniert.

### Band Entladen/Laden

Beim Entladen wird der Kopf H auf die erste (O) Spur gesteppt. Sobald das Ende des für die Signalaufzeichnung benutzten Teils des Bandes am Kopf H vorbeigelaufen ist z. B. hinter TA2 werden die in $S_s$ und $S_x$ gespeicherten Daten durch Anlegen eines Taktsignals Ts an diese Register $S_s$, $S_x$ seriell ausgelesen, in geeigneter Form kodiert und dem Kopf H zur Aufzeichnung zugeführt. Ein Taktgenerator TG liefert den Takt Ts. Die Kodierung erfolgt in einem Kodierer (COD) vorteilhaft in einem der von der Datenaufzeichnung her bekannten selbsttaktenden Kodes wie NRZ (Non Return to Zero), FM (Frequency Modulation) oder MFM (Modified Frequency Modulation auch als Miller-Code bezeichnet). Am Aufsprechkopf H steht die kodierte Ortsinformation CPI zur Aufzeichnung zur Verfügung.

Der Entladevorgang im Sinne der Übertragung der Ortsinformation wird dabei zweckmäßig über einen Schalter SWU eingeleitet, der z. B. beim Zurückspulen des Bandes oder kurz vor Entnahme einer Bandkassette aus einem Gerät zwangsläufig, möglichst automatisch betätigt wird. Die Aufzeichnung der Information CPI erfolgt unmittelbar nach der Kodierung ebenfalls automatisch noch vor Entnahme des Bandes z. B. auf das Bandstück zwischen TA2 und BOT, in der Spur (O). Danach wird das Band oder die Bandkassette zum Herausnehmen freigegeben durch geeignete elektrische und mechanische Steuer- und Freigabeeinrichtungen.

Beim Wieder-Laden des Bandes oder der Bandkassette (z. B. beim Schließen des Schalters SWL) wird die kodierte Information CPI von der ersten Spur (O) mittels des Kopfes H gelesen, im Dekodierer (DEC) dekodiert und wieder in die Schieberegister $S_s$ und $S_x$ eingelesen und zwar in in umgekehrter Schieberichtung (z. B. Auslesen von Ss und Sx in Links-Rechts-Richtung — Einlesen in Rechts-Links-Richtung), damit die Reihenfolge der Datensignale dieselbe bleibt.

Der Takt zum Einlesen wird dabei aus dem Lesesignal gewonnen, so daß Schwankungen in der Bandgeschwindigkeit keine Fehler verursachen können.

### Aufsuchen einer vorgewählten Bandstelle

Der Zwischenspeicher Ss enthält die gewünschte Ortsinformation im vorliegenden Beispiel, also die aus Spurlänge und Spurzahl bestehenden Koordinaten, und der Istwertspeicher Zs enthält die Koordinaten der Momentanstellung des Kopfes H auf dem Band. Wenn die Befehlsinformation « Aufsuchen » z. B. durch Schließen des Schalters SWE gegeben ist, wird über die Vergleicher COM I und COM II der Koordinatenvergleich zwischen den Speichern S und Z durchgeführt. Zum Einstellen der Spurlage werden die Inhalte der Speicher Zs und Ss verglichen, indem ihre Parallelausgänge mit dem Vergleicher COM I verbunden werden, der die Differenz $Z_s$ und $S_s$ bildet. Je nachdem, ob diese Differenz größer oder kleiner als Null ist, steht ein Signal zum Aufwärts- bzw. Abwärtssteppen für die Kopfeinstellvorrichtung HST am Ausgang des Vergleichers COM I zur Verfügung. Das Befehlssignal steht am Ausgang des Vergleichers solange an, bis die Differenz zu Null geworden ist und die vorgewählte Spurzahl somit erreicht ist. Der entsprechende Vergleichsvorgang findet zwischen den Inhalten $z_x$ und $s_x$ der Speicher $Z_x$ und $S_x$ über den Vergleicher COM II statt. Die Befehls- oder Steuersignale am Vergleicherausgang werden an die Steuereinheit des Laufwerks gegeben, letzteres ist als Baueinheit TT dargestellt. Die Steuersignale bedeuten einen Vorwärtslauf (FW) oder Rückwärtslauf (BW) je nachdem, ob die Differenz positiv oder negativ ist. Es kann z. B. zweckmäßig als « vorwärts » die Laufrichtung des Laufwerks festgelegt werden, die im Gerät bei Aufzeichnungs-/Wiedergabebetrieb durch die Steuereinheit vorgegeben ist, also von links nach rechts auf ungeraden Spuren und von rechts nach links auf geraden Spuren.

Das Aufsuchen der Längenkoordinate läßt sich noch verfeinern dadurch, daß man in den betreffenden Vergleicher COM II Schwellen für die Differenz von $z_x$ und $s_x$ einbaut, z. B. 2 und 1, und vorgibt : Differenz zwischen Soll- und Istkoordinate $> 2$ ergibt maximale Motorgeschwindigkeit. Differenz 2 ... 1 ergibt Normalgeschwindigkeit. Differenz $\leq 1$ bewirkt reduzierte Geschwindigkeit.

Die beiden Suchvorgänge für Spur- und Längenkoordinate sind voneinander unabhängig und können daher gleichzeitig ablaufen.

Im folgenden werden noch Erläuterungen zu den Zeichnungen gegeben.

Als « Koppeleinrichtungen » im Sinne des Anspruchs 1 werden folgende Schaltungsteile angesehen : Monoflops M1 bis M3, Flipflop FF, Gatter L1 bis L8, Taktgenerator TG, Laufzeitglied T sowie alle Leitungsverbindungen. Diese « Koppeleinrichtungen » werden bei den Operationen « Vorwählen » und « Aufsuchen » wirksam und sorgen für die Befehlsübertragung und bewirken die Erzeugung der Steuersignale für das Laufwerk.

Die Schaltungsteile, die für die Operation « Vorwählen » benutzt werden, sind Zähler $Z_s$, Speicher $S_s$, Verknüpfungsglied L2. Das UND-Gatter L1 tritt in Funktion, wenn zur Betriebsart « Aufsuchen » der Schalter SWE betätigt wird.

Der Eingang DWN/UP am Zähler ist für die Zählrichtung maßgebend. HI (logisch 1) bewirkt Abwärtszählen. Mit CT ist der Zähleingang bezeichnet. Die Befehle Aufwärtssteppen und Abwärtssteppen werden von der Steuereinheit des LVR-Geräts sowieso bereitgestellt, da sie die Kopfeinstellvorrichtung HST steuern. Der vom Benutzer z. B. über Schließen des Schalters SWS gegebene Befehl « Vorwählen » bewirkt das Laden der momentanen Ortsinformation aus dem Zähler $Z_s$ von dessen parallelen Datenausgängen $Q_A$, $Q_B$ ... $Q_H$ in die parallelen Dateneingänge A ... H des Schieberegisters $S_s$ zur vorübergehenden Speicherung der Ortsinformation.

Zum Schaltkreis zum Aus- und Einlesen der Ortsinformation beim Entladen/Laden des Aufzeichnungsträgers oder der Kassette gehört ein weiteres Schieberegister $S_x$ dazu, das in Figur 3 als Einheit mit dem Schieberegister $S_s$ dargestellt ist. Die beiden Register sind zweckmäßig in Kaskade geschaltet, so daß der serielle Datenausgang von $S_s$ für Rechtsschieben dem seriellen Dateneingang von $S_x$ für Rechtsschieben entspricht und der serielle Datenausgang von $S_x$ für Linksschieben dem seriellen Dateneingang von $S_s$ für Linksschieben entspricht. Die Takt- und Schieberichtungseingänge CL bzw. DIR beider Schieberegister sind dabei zusammengeschaltet.

Der Taktgenerator TG erzeugt ein zum Auslesen der Daten aus $S_s + S_x$ benötigtes Taktsignal Ts einer geeigneten Frequenz; seine Periode werde mit T bezeichnet.

Der vom Benutzer zum Entladen der Kassette eingetastete Befehl z. B. Schließen des Schalters SWU startet den positiv flankengetriggerten Monoflop M1. Dessen Zeitkonstante ist gleich 16 T, er läßt also 16 Takte T des Taktgenerators TG das Gatter L7 passieren. Beim Zurückfallen von M1 wird ein negativ flankengetriggerter Monoflop M2 gestartet, er sperrt während seiner aktiven Zeit von beispielsweise ta = 30 sec das Gatter L7 und verhindert, daß weitere Taktsignale zum Schieberegister $S_s + S_x$ gelangen.

Die 16 Takte schieben die 16 Bits von $S_s + S_x$ nach rechts aus dem seriellen Datenausgang R in einen Kodierer COD, der sie, unter Benutzung des gleichzeitig zugeführten Taktes Ts in einen der beispielsweise oben aufgeführten selbsttaktenden Kode kodiert, so daß ein Signal CPI entsteht. Auf den Kopf H wird die kodierte Ortsinformation CPI zur Speicherung, in diesem Beispiel zur Aufzeichnung im Bereich zwischen TA2 und BOT auf dem Band in Figur 2, zugeführt. Das Laufzeitglied τ bewirkt, daß die Laufzeit von L7 direkt nach COD genauso lang wird wie die Laufzeit von L7 über L6, $S_s + S_x$ nach COD.

Die Monoflops M1 und M2 sorgen für eine Freigabe des Taktgenerators TG nur im Falle des Entladens, da sie durch Schalter SWU angesteuert werden.

Im Fall des Ladevorgangs des Bandes bzw. der Bandkassette, wenn Schalter SWL betätigt ist, wird über einen positiv flankengetriggerten Monoflop M3 ein positiver Impuls geeigneter Dauer (je nach Art des Laufwerks, jedoch länger als 16 T) ausgeben. Dieser Impuls schaltet die Schieberichtung DIR auf « Links » und öffnet über das Gatter L5 die Leitung vom Kopf H, der hier als Wiedergabekopf wirkt, zum Dekodierer DEC. Damit ist die Anordnung für die vom Speicher, hier vom Band gelesene dekodierte Ortsinformation vorbereitet. Spätestens bei Beendigung des Ladevorgangs muß der Impuls vom Monoflop M3 beendet und damit auch Gatter L5 gesperrt sein, damit keine Nutzinformation, z. B. Videosignale zum Dekodierer gelangen. Beim Dekodieren wird der Takt Ts dem Signal CPI direkt entnommen und zum Eintakten in das Schieberegister $S_s + S_x$ am Eingang CL angelegt, die dekodierte Ortsinformation wird über den Dateneingang L mit Schieberichtung « Links » eingelesen.

Als Sicherung gegen Fehlbedienung ist ein Sperren des Takteingangs CL des Schieberegisters $S_s + S_x$ außerhalb des Lade- oder Entladevorgangs möglich, aber nicht dargestellt.

Zum Aufsuchen einer vorgewählten Bandstelle dienen, wie oben beschrieben, die Vergleicher COM I und II, die an den Parallelausgängen der Speicher $S_s$ und $S_x$ angeschaltet sind. Über das Betätigen des Schalters SWE (Aufsuchen) werden die Speicherinhalte über die Gatter L6 und L7 auf die Vergleicher gegeben, die wie beschrieben durch das Differenzausgangssignal die Kopfeinstellvorrichtung HST bzw. die Steuereinheit des Laufwerks TT steuern.

Damit der Benutzer nicht während der gesamten Suchzeit den Schalter SWE, der als Taste ausgebildet sein kann, betätigen muß, kann ein Flipflop FF vorgesehen sein, der den Befehl « Aufsuchen » gibt und von den Vergleichern COM I und COM II zurückgesetzt wird, wenn bei beiden die Differenz Null ist (UND-Gatter L8).

Die 8-Bits für die Spurzahl sind mit A bis H, diejenigen für die Spurlänge mit I bis Q bezeichnet. Nur für Bits A und I sind die Verbindungsleitungen wegen einer übersichtlicheren Darstellung eingezeichnet. Erwähnt wird noch die Ansteuerung der CLR-Eingangsklemmen der Zähler $Z_s$ und $Z_x$: Beim Laden des Bandes oder der Kassette werden beide Zähler $Z_s$ und $Z_x$ auf Null zurückgesetzt, bei jedem zweiten Richtungswechsel wird zusätzlich $Z_x$ allein auf Null zurückgestellt. Das Befehlsignal BW (Rückwärtslauf) am Zählrichtungseingang DWN/UP des Zählers $Z_x$ wird vom Ausgang des Vergleichers COM II übernommen. Solange dieses Signal auf LO (Logisch Null) liegt, zählt der Zähler $Z_x$ aufwärts. Die Zählimpulse werden vom Tacho TC, der an die Bandantriebsrolle angekoppelt ist, geliefert, und die Impulse werden durch einen festen Faktor (z. B. 150/128 s. o.) geteilt vor Eingabe in $Z_x$. Die Und-Gatter L3 und L4 entsprechen L1 und L2.

Die beschriebene Anordnung läßt sich ohne weiteres auf die Vorwahl mehrerer Stellen auf demselben Aufzeichnungsträger erweitern. Liegt ein Magnetband als Aufzeichnungsträger vor, so ist es möglich, einen geeigneten Speicherbereich mit entsprechend größerer Kapazität vorzusehen. Dabei ist es auch möglich, mehrere Gruppen von Speicherplätzen für je eine Stelle vorzusehen. Entweder ordnet man jeder Stelle eine Kennmarkierung, z. B. eine Zahl zu, die bei Vorwahl- und Suchbefehl in das gerät eingegeben werden muß, oder man gestattet nur die starre Reihenfolge des Vorwählens mehrerer Stellen auch beim Aufsuchen derselben.

Es ist auch möglich, eine optische Anzeige für den Inhalt des Schieberegisters $S_s + S_x$ vorzusehen, die auch erhalten bleibt, wenn der bandförmige Aufzeichnungsträger oder die Bandkassette aus dem Gerät entladen ist. Für die Eingabe des Aufsuchbefehls ist es möglich, einen Eingabespeicher S' vorzusehen, der mit dem Zwischenspeicher verbunden ist und der zum Vorspeichern aufzusuchender Stellen dient.

Zum Zwischenspeichern mehrerer Ortsinformationen können zweckmäßig mehrere parallele, schieberegisterähnliche Speicher, z. B. Matrix-Speicher nach dem Ladungsspeicherprinzip verwendet werden.

Die mittels oben beschriebener Anordnungen erreichbaren Funktionen können, wie für den Fachmann selbstverständlich, auch mit einem entsprechend benutzten Mikroprozessor realisiert werden.

**Ansprüche**

1. Anordnung zum Speichern und Wiederauffinden von Stellen auf einem bandförmigen Aufzeichnungsträger (10), insbesondere einer Magnetbandkassette, in einem Aufnahme/Wiedergabegerät, sowie eine Steuereinheit für den Transport des Aufzeichnungsträgers und zur fortlaufenden Bildung von Ortsinformationen (PI) des Aufzeichnungsträgers relativ zum Abtastkopf (11), wobei dem Aufzeichnungsträger ein Speicher (T) zugeordnet ist, der mit dem Aufzeichnungsträger dem Gerät entnehmbar und wiedereinsetzbar ist und der zur Speicherung von der Ortsinformation von zumindest einer Stelle einer Signalaufzeichnung auf dem Aufzeichnungsträger dient, dadurch gekennzeichnet, daß

a) zumindest ein geräteseitiger Zwischenspeicher (S, S') vorgesehen ist, der die Ortsinformationen (PI) der momentan vorliegenden Stelle (P) auf einen Vorwahl-Schaltbefehl (Schalter SWS in Figur 3) hin zwischenspeichert,

b) der dem Aufzeichnungsträger zugeordnete Speicher (T) durch einen Anfangs- oder Endbereich (BOT bis TA2 oder TA1 bis EOT) auf dem Aufzeichnungsträger (10) selbst gebildet ist, und

c) Koppeleinrichtungen vorgesehen sind,

— die vor Entnahme des Aufzeichnungsträgers (10) aus dem Gerät diesen auf den Anfangs- bzw. Endbereich transportieren und auf einen Schaltbefehl (Schalter SWU in Figur 3) hin die Übertragung der im geräteseitigen Zwischenspeicher (S, S') eingeschriebenen Ortsinformationen (PI) in den Anfangs- bzw. Endbereich des Aufzeichnungsträgers durchführen,

— die beim oder nach dem Laden des Aufzeichnungsträgers (10) in das Gerät auf Schaltbefehle (Schalter SWL) hin die gespeicherte(n) Ortsinformation(en) (PI) im Anfangs- oder Endbereich des Aufzeichnungsträgers (10) mittels des Abtastkopfes lesen und danach wieder in den geräteseitigen Zwischenspeicher (S, S') überführen und

— die bei Vorliegen eines Befehls zum Aufsuchen (Schalter SWE) einer vorgewählten Bandstelle abhängig von einer zwischengespeicherten Ortsinformation (PI) Steuersignale für die Steuereinheit des Laufwerks (TT) erzeugen.

2. Anordnung nach dem Anspruch 1 mit einem Aufzeichnungsträger mit mehreren Aufzeichnungsspuren, dadurch gekennzeichnet, daß die Ortsinformation (PI) eine Information über den Abstand der Stelle (X) von einer Feststelle auf dem Aufzeichnungsträger, insbesondere vom Anfang (BOT) oder vom Ende (EOT) des Aufzeichnungsträgers (10) und die jeweilige Spurzahl (Y) enthält.

3. Anordnung nach Anspruch 2, dadurch gekennzeichnet, daß aus der gespeicherten Ortsinformation (PI) ein Steuersignal für eine Einstellvorrichtung (HST) für den Abtastkopf (11) ableitbar ist.

4. Anordnung nach einem der Ansprüche 1 bis 3, dadurch gekennzeichnet, daß die Ortsinformation (PI) in Form eines mittels eines selbsttaktenden Kodes kodierten Signals (CPI) auf dem Aufzeichnungsträger aufgezeichnet wird.

5. Anordnung nach einem der Ansprüche 1 bis 4, dadurch gekennzeichnet, daß außer dem Zwischenspeicher (S, S') auch ein Istwertspeicher (I, Z) zur Speicherung der momentanen Ortsinformationen vorgesehen ist.

6. Anordnung nach einem der Ansprüche 1 bis 5, dadurch gekennzeichnet, daß der Zwischenspeicher (S, S') mindestens ein Schieberegister $(S_s, S_x)$ enthält.

7. Anordnung nach Anspruch 5, dadurch gekennzeichnet, daß die Koppeleinrichtungen eine Vergleichsschaltung (COM I und COM II) enthalten, die die Inhalte des Zwischenspeichers (S, S') und des Istwertspeichers (I, Z) vergleicht und ein Steuersignal für die Steuereinheit des Gerätes (TT) bildet, damit der Aufzeichnungsträger (10) in die Stellung überführt wird, in der die Differenz der Speicherinhalte Null ist.

8. Anordnung nach Ansprüchen 4 und 6, dadurch gekennzeichnet, daß dem Schieberegister $(S_s, S_x)$ Kodier- und Dekodiereinrichtungen (COD bzw. DEC) nach- bzw. vorgeschaltet sind.

9. Anordnung nach Anspruch 5, dadurch gekennzeichnet, daß eine Anzeigevorrichtung für die Moment-Ortsinformation des Istwertspeichers (I, Z) vorgesehen ist.

10. Anordnung nach Anspruch 7, dadurch gekennzeichnet, daß eine Vergleichsschaltung (COM II) Schwellen für verschiedene Differenzwerte der Speicherinhalte des Zwischenspeichers (S, S') und des Istwertspeichers (I, Z) aufweist, wobei mittels der Schwellen unterschiedliche Geschwindigkeiten des Laufwerks steuerbar sind.

**Claims**

1. A system for storing and refinding positions on a tapelike recording medium (10), particularly on the tape of a magnetic tape cassette, in a recording/playback apparatus, and a control unit for controlling the movement of the recording medium relative to the scanning means (11), and for continuously producing location signals (PI) indicating the position of the recording medium relative to the said scanning means, a memory (T) being associated with the recording medium, which memory can be removed from, and reinserted in, the apparatus together with the recording medium, and serves to store the location signal indicating at least one position of a recording on the recording medium, wherein

a) at least one apparatus-associated intermediate store (S, S') is provided which, when the « preselect » command is given (via switch SWS in Fig. 3), temporarily stores the location signal (PI) indicating the momentary position (P) of the medium relative to the scanning means,

b) the memory (T) associated with the recording medium is an area at the beginning or end of the recording medium itself (BOT to TA2 or TA1 to EOT), and

c) coupling devices are provided

— which, prior to removal of the recording medium (10) from the apparatus, transport the medium to the area at the beginning or end thereof and, when a command is given (via switch SWU in Fig. 3), transfer the location signals (PI) stored in the apparatus-associated intermediate store (S, S') into the area at the beginning or end of the recording medium,

— which, upon or after insertion of the recording medium (10) in the apparatus, and when a command is given (via switch SWL), read the stored location signal(s) (PI) in the area at the beginning or end of the recording medium via the scanning means, and then transfer them back into the apparatus-associated intermediate store (S, S'), and

— which, when a command to search for a preselected position on the tape is given (via switch SWE), produce control signals for the control unit of the transport apparatus (TT), depending on a temporarily stored location signal (PI).

2. A system as claimed in claim 1, comprising a recording medium having a plurality of recording tracks, wherein the location signal (PI) contains information about the distance of the position (X) from a specific point on the recording medium, particularly from the beginning (BOT) or from the end (EOT) of the recording medium (10), as well as the track number (Y) concerned.

3. A system as claimed in claim 2, wherein a control signal for an actuator (HST) for the scanning means (11) can be derived from the stored location signal (PI).

4. A system as claimed in any of claims 1 to 3, wherein the location signal (PI) is recorded on the medium in the form of a signal (CPI) which is encoded by means of a self-clocking code.

5. A system as claimed in any of claims 1 to 4, wherein an actual-value memory (I, Z) for storing the momentary position information is provided in addition to the intermediate store (S, S').

6. A system as claimed in any of claims 1 to 5, wherein the intermediate store (S, S') contains at least on shift register (S$_s$, S$_x$).

7. A system as claimed in claim 5, wherein the coupling devices comprise a comparator circuit (COM I and COM II) which compares the contents of the intermediate store (S, S') and the actual-value memory (I, Z) and forms a control signal for the control unit of the apparatus (TT) so that the recording medium (10) is transported to the position where the difference between the respective contents of the said store and memory is zero.

8. A system as claimed in claims 4 and 6, wherein the shift register (S$_s$, S$_x$) is followed and preceded, respectively, by encoding and decoding means (COD and DEC respectively).

9. A system as claimed in claim 5, wherein a display unit is provided for the momentary position information stored in the actual-value memory (I, Z).

10. A system as claimed in claim 7, wherein a comparator circuit (COM, II) has threshold values for various differences between the contents of the intermediate store (S, S') and the actual-value memory (I, Z), different speeds of the transport apparatus being controllable by means of the threshold values.

## Revendications

1. Agencement pour mémoriser et retrouver des emplacements sur un support d'enregistrement en forme de bande (10), en particulier une cassette de bande magnétique, dans un appareil d'enregistrement/reproduction, ainsi qu'une unité de commande pour le transport du support d'enregistrement et pour la formation continue d'informations de position (PI) du support d'enregistrement par rapport à la tête de lecture, une mémoire (T) étant associée au support d'enregistrement, pouvant, avec le support d'enregistrement, être enlevée et remise en place sur l'appareil et servant à mémoriser l'information de position d'au moins un emplacement d'enregistrement de signal sur le support d'enregistrement, caractérisé par le fait que

a) il est prévu au moins une mémoire intermédiaire (S, S'), côté appareil, qui assure une mémorisation intermédiaire des informations de position (PI) de l'emplacement (P) instantané, sur une instruction de commutation de présélection (commutateur SWS sur la fig. 3) ;

b) la mémoire (T) associée au support d'enregistrement est formée par une zone de début ou de fin (BOT à TA2 ou TA1 à EUT) sur le support d'enregistrement (10) lui-même ;

c) il est prévu des moyens de couplage

— qui, avant enlèvement de l'appareil du support d'enregistrement (10), transportent celui-ci sur la zone de début ou de fin et, sur une instruction de commutation (commutateur SWU sur la fig. 3) assurent le transfert, dans la zone de début ou de fin du support d'enregistrement, des informations de position (PI) inscrites dans la mémoire intermédiaire (S, S') côté appareil

— qui, pendant ou après la charge du support d'enregistrement (10) dans l'appareil, lisent, au moyen de la tête de lecture, sur instruction de commutation (commutateur SWL) la (les) information(s) de position (PI) mémorisée dans la zone de début ou de fin du support d'enregistrement (10), puis les transfèrent à nouveau dans la mémoire intermédiaire (S, S') côté appareil, et

— qui par présentation d'une instruction d'exploration (commutateur SWE) d'un emplacement de bande présélectionnée, dépendant d'une information de position (PI) mise en mémoire intermédiaire, produisent des signaux de commande pour l'unité de commande du mécanisme d'entraînement (TT).

2. Agencement selon la revendication 1, avec support d'enregistrement à plusieurs pistes d'enregistrement, caractérisé par le fait que l'information de position (PI) contient une information sur l'écart entre l'emplacement (X) et un emplacement fixe sur le support d'enregistrement, en particulier le début (BOT) ou la fin (EOT) du support (10) et le numéro de piste correspondant (Y).

3. Agencement selon la revendication 2, caractérisé par le fait que de l'information de position (PI) mémorisée, peut être dérivé un signal de commande pour un dispositif de réglage (HST) de la tête de lecture (11).

4. Agencement selon l'une des revendications 1 à 3, caractérisé par le fait que l'information de position (PI) est enregistrée, sur le support d'enregistrement, sous forme d'un signal (CPI) codée au moyen d'un code se rythmant de lui-même.

5. Agencement selon l'une des revendications 1 à 4, caractérisé par le fait que, outre la mémoire intermédiaire (S, S'), il est prévu aussi une mémoire de valeur réelle (I, Z) pour mémoriser les informations de position instantanée.

6. Agencement selon l'une des revendications 1 à 5, caractérisé par le fait que la mémoire intermédiaire (S, S') contient au moins un registre à décalage ($S_s$, $S_x$).

7. Agencement selon la revendication 5, caractérisé par le fait que les moyens de couplage contiennent un circuit comparateur (COMI et COMII), qui compare les contenus de la mémoire intermédiaire (S, S') et de la mémoire de valeur réelle (I, Z) et forme un signal de commande pour l'unité de commande de l'appareil (TT), afin que le support d'enregistrement (10) soit amené dans la position dans laquelle la différence entre les contenus des mémoires est nulle.

8. Agencement selon les revendications 4 et 6, caractérisé par le fait que, en amont ou en aval du registre de décalage ($S_s$, $S_x$), sont connectés des moyens de codage ou décodage (COD ou DEC).

9. Agencement selon la revendication 5, caractérisé par le fait qu'il est prévu un moyen indicateur pour l'information de position instantanée de la mémoire de valeur réelle (I, Z).

10. Agencement selon la revendication 7, caractérisé par le fait qu'un circuit comparateur (COM II) présente des seuils pour différentes différences entre les contenus des mémoires intermédiaires (S, S') et de valeur réelle (I, Z), ces seuils pouvant commander différentes vitesses du mécanisme d'entraînement.

FIG.1

FIG.2

FIG.3